# EUROPEAN PATENT APPLICATION

(11) **EP 3 886 218 A1**
(43) Date of publication of application: **29.09.2021**
(21) Application number: 21154486.1
(22) Date of filing: 01.02.2021
(51) Int. Cl.: H01M 4/38, H01M 4/36, H01M 4/134, H01M 4/48, H01M 4/58, H01M 4/64, H01M 10/0525, H01M 4/02

(54) **NEGATIVE ELECTRODE PLATE, ELECTROCHEMICAL DEVICE, AND ELECTRONIC DEVICE**

(30) Priority: 25.03.2020 CN 202010216732
(71) Applicant: Ningde Amperex Technology Limited, Ningde, Fujian 352100 (CN)
(72) Inventor: DUAN, Yueting, Ningde City,, Fujian Province 352100 (CN)
(74) Representative: Klunker IP Patentanwälte PartG mbB

(57) **Abstract**

Embodiments of this application provide a negative electrode plate, an electrochemical device, and an electronic device. The negative electrode plate includes: a current collector; a first active material layer, where the first active material layer includes first silicon-based material particles; and a second active material layer, where the second active material layer includes second silicon-based material particles. The first active material layer is provided between the current collector and the second active material layer. A weight percentage of a silicon element based on a weight of the first active material layer is less than a weight percentage of the silicon element based on a weight of the second active material layer, and an average particle size Dv50 of the first silicon-based material particles is smaller than an average particle size Dv50 of the second silicon-based material particles. This application reduces defilming of the negative electrode plate containing silicon-based material particles in a cycle, deformation of an electrode assembly, and tearing of the current collector, and enhances charging capabilities of the negative electrode plate.

## Description

### TECHNICAL FIELD

This application relates to the technical field of electronics, and in particular, to a negative electrode plate, an electrochemical device, and an electronic device.

### BACKGROUND

In recent years, with rapid developments of electronic products and electric vehicles, there have been increasingly higher requirements for an energy density of electrochemical devices (e.g., lithium-ion batteries) with a high energy density. To meet such requirements, electrochemical devices using pure-graphite as negative active materials, have become increasingly insufficient.

With a theoretical specific capacity of up to 4,200 mAh/g, a silicon-based material is a promising negative active material for next-generation electrochemical devices. However, the silicon-based material expands at a volume expansion rate of approximately 300% during charge/discharge cycles, and generates a huge mechanical stress. In addition, due to transverse expansion during charge/discharge cycles, the silicon-based material is likely to cause peel-off, that is, defilming, of an active material layer from a current collector, or cause wrinkling or even tearing of the current collector. Consequently, in the charge/ discharge cycles, the electrochemical device is unable to transmit electrons, and thus entirely fails. In addition, the demand for fast-charge performance is increasing in the market, and the fast-charge performance of the electrochemical device including silicon-based material still needs to be further improved.

### SUMMARY

The present application sets a weight percentage distribution of a silicon element and a particle size distribution of a silicon-based material in an active material layer to solve problems caused by volume expansion of the silicon-based material and also improve charging capabilities of a negative electrode plate.

Some embodiments of the present application provides a negative electrode plate, including: a current collector; a first active material layer. The first active material layer includes first silicon-based material particles; and a second active material layer, and the second active material layer includes second silicon-based material particles. The first active material layer is provided between the current collector and the second active material layer. A weight percentage of a silicon element based on a weight of the first active material layer is less than a weight percentage of the silicon element based on a weight of the second active material layer. An average particle size Dv50 of the first silicon-based material particles is smaller than an average particle size Dv50 of the second silicon-based material particles.

In the negative electrode plate, a weight percentage of the silicon element based on a weight of the first silicon-based material particles is less than a weight percentage of the silicon element based on a weight of the second silicon-based material particles.

In the negative electrode plate, the weight percentage of the silicon element based on the weight of the first active material layer is within a range of 0.1%∼30%, and the weight percentage of the silicon element based on a weight of the second active material layer is within a range of 1%∼100%.

In the negative electrode plate, the weight percentage of the silicon element based on the weight of the first silicon-based material particles is within a range of 0.1%∼50%, and the weight percentage of the silicon element based on the weight of the second silicon-based material particles is within a range of 3%∼100%.

In the negative electrode plate, the average particle size Dv50 of the first silicon-based material particles satisfies 1 µm ≤ Dv50 ≤ 8 µm.

In the negative electrode plate, a thickness of the first active material layer is within a range of 0.2 µm∼100 µm, and a thickness of the second active material layer is within a range of 0.2 µm∼100 µm.

In the negative electrode plate, the first silicon-based material particles and the second silicon-based material particles each independently include one or more of silicon, a silicon alloy, a silicon oxide, or a silicon-carbon composite.

In the negative electrode plate, the first active material layer and the second active material layer further include, each independently, at least one of artificial graphite, natural graphite, mesocarbon microbead, soft carbon, or hard carbon.

An embodiment of this application further provides an electrochemical device, including: a positive electrode plate; a negative electrode plate; and a separator provided between the positive electrode plate and the negative electrode plate. The negative electrode plate is any one of the negative electrode plates described above.

An embodiment of this application further provides an electronic device, including the electrochemical device.

In this application, the content of the silicon element in the active material layer close to the current collector is relatively low, and the content of the silicon element in the active material layer far away from the current collector is relatively high. This effectively reduces a stress formed by stretching of the silicon-based material and received by the current collector, and suppresses the peel-off of the active material layer, the deformation of the electrode assembly, and the tearing of the current collector. In addition, the silicon-based material in the active material layer close to the current collector adopts particles of relatively small diameters, and the silicon-based material in the active material layer far away from the current collector adopts particles of relatively large diameters. The silicon-based material particles in the active material layer (that is, the second active material layer) far from the current collector and directly contacting the electrolytic solution are larger, a porosity of the second active material layer is higher than a porosity of the first active material layer, so that lithium ions in the electrolytic solution can be transmitted more conveniently in the negative electrode plate. In addition, the silicon-based material in the active material layer close to the current collector has a smaller particle size, that is, a larger specific surface area, thereby increasing an area of contact with the lithium ions in the electrolytic solution, and compensating for a disadvantage of liquid phase diffusion of the silicon-based material in the active material layer close to the current collector.

### BRIEF DESCRIPTION OF THE DRAWINGS

FIG. 1 is a schematic diagram of a negative electrode plate according to the present application; and
FIG. 2 is a schematic diagram of an electrode assembly of an electrochemical device according to the present application.

### DETAILED DESCRIPTION OF EMBODIMENTS

The following embodiments are provided to enable a person skilled in the art to understand the present application more comprehensively, and are not intended to limit the present application in any way.

As a next-generation negative active material of a high specific capacity, the usage of a silicon-based material can significantly increase an energy density of an electrochemical device. However, the silicon-based material may be of low conductivity, and may expand and contract to a considerable extent in company with insertion and extraction of lithium ions. During cycles, the silicon-based material is likely to cause peel-off of a negative active material layer from a current collector, or even tearing of the current collector, thereby affecting cycle performance of the electrochemical device.

In practical applications of the silicon-based negative active material, the negative electrode plate according to the present application includes a first active material layer and a second active material layer. The first active material layer includes first silicon-based material particles. The second active material layer includes second silicon-based material particles. The first active material layer is provided between the current collector and the second active material layer. By setting a weight percentage of a silicon element based on the weight of the first active material layer to be less than a weight percentage of the silicon element based on the weigh oft the second active material layer, this application effectively reduces a stress formed by stretching of the silicon-based material and received by the current collector , and suppresses the peel-off of the active material layer, the deformation of an electrode assembly, and the tearing of the current collector. In addition, an average particle size Dv50 of the first silicon-based material particles is smaller than an average particle size Dv50 of the second silicon-based material particles. The second silicon-based material particles have a relatively large average particle size Dv50 and a relatively high porosity, thereby facilitating an electrolytic solution to infiltrate the active material layer of the negative electrode plate, and also facilitating lithium ions in the electrolytic solution to move in the negative electrode plate. In addition, the first silicon-based material particles have a smaller average particle size Dv50, which usually means a larger specific surface area, thereby increasing an area of contact with the lithium ions in the electrolytic solution, and compensating for a disadvantage of liquid phase diffusion of the first silicon-based material particles in the first active material layer. Some embodiments of the present application avoid defilming of the negative electrode plate containing silicon-based material particles in cycles, the deformation of the electrode assembly, and the tearing of the current collector, and enhance charging capabilities of the negative electrode plate.

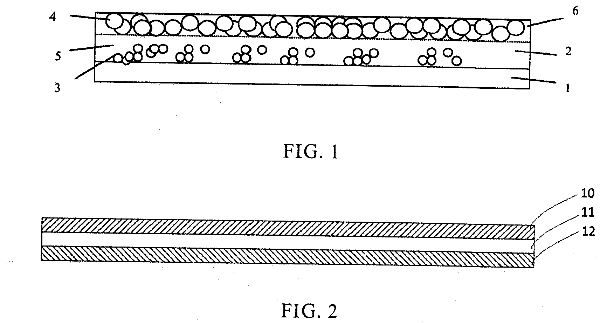

As shown in FIG. 1, some embodiments of the present application provide a negative electrode plate. The negative electrode plate includes a current collector 1 and an active material layer 2. The active material layer 2 is located on the current collector 1. Understandably, although the active material layer 2 shown in FIG. 1 is located on one side of the current collector 1, this is merely exemplary, and the active material layer 2 may alternatively be located on both sides of the current collector 1. In some embodiments, the current collector 1 of the negative electrode plate may include at least one of a copper foil, an aluminum foil, a nickel foil, or a carbon-based current collector.

In some embodiments, the active material layer 2 includes a first active material layer 5 and a second active material layer 6. The first active material layer 5 is provided between the current collector 1 and the second active material layer 6. In some embodiments, the first active material layer 5 includes first silicon-based material particles 3, and the second active material layer 6 includes second silicon-based material particles 4. Understandably, an interface between the first active material layer 5 and the second active material layer 6 is shown by a dotted line in FIG. 1. However, the interface may be actually absent or non-level. In some embodiments, the first silicon-based material particles 3 and second silicon-based material particles 4 each independently include one or more selected from the group consisting of silicon, a silicon alloy, a silicon oxide, and a silicon-carbon composite. In some embodiments, a weight percentage of the silicon element based on the weight of the first active material layer is less than a weight percentage of the silicon element based on the weight of the second active material layer. In some embodiments, an average particle size Dv50 of the first silicon-based material particles 3 is smaller than an average particle size Dv50 of the second silicon-based material particles 4. Dv50 represents a particle size of the material at a cumulative volume of 50% in a volume-based particle size distribution as measured by using a laser scattering particle size analyzer.

By setting the weight percentage of the silicon element based on the weight of the first active material layer to be less than the weight percentage of the silicon element based on the weight of the second active material layer, the present application effectively reduces the stress formed by stretching of the silicon-based material particles and received by the current collector 1, and suppresses the peel-off of the active material layer, the deformation of the electrode assembly, and the tearing of the current collector. In addition, the average particle size Dv50 of the first silicon-based material particles 3 is smaller than the average particle size Dv50 of the second silicon-based material particles 4. The first active material layer is closer to the current collector, and the second active material layer is farther away from the current collector. Therefore, an electrolytic solution infiltrates the second active material layer first. The second silicon-based material particles 4 in the second active material layer have a relatively large average particle size Dv50 and a relatively high porosity, thereby facilitating the electrolytic solution to infiltrate the first active material layer of the negative electrode plate, and also facilitating the lithium ions in the electrolytic solution to move in the negative electrode plate. In addition, the first silicon-based material particles 3 have a smaller average particle size Dv50, that is, a larger specific surface area, thereby increasing an area of contact with the lithium ions in the electrolytic solution, and compensating for the disadvantage of liquid phase diffusion of the first silicon-based material particles 3.

In some embodiments, the weight percentage of the silicon element based on the weight of the first silicon-based material particles 3 is less than the weight percentage of the silicon element based on the weight of the second silicon-based material particles 4. The weight percentage of the silicon element based on the weight of the first silicon-based material particles 3 in the first active material layer 5 is less than the weight percentage of the silicon element based on the weight of the second silicon-based material particles 4 in the second active material layer 6, and the first active material layer 5 is closer to the current collector 1 than the second active material layer 6. This effectively reduces the stress formed by stretching of the silicon-based material particles and received by the current collector 1, and suppresses the peel-off of the active material layer, the deformation of the electrode assembly, and the tearing of the current collector.

In some embodiments, a thickness of the first active material layer is within a range of 0.2 µm∼100 µm, and a thickness of the second active material layer is within a range of 0.2 µm∼100 µm. In some embodiments, when the thickness of the first active material layer or the second active material layer is too small, sufficient active material cannot be maintained. On the other hand, when the thickness of the first active material layer or the second active material layer is too large, liquid phase diffusion of the electrolytic solution in the active material layer close to the current collector (e.g., the first active material layer), is adversely affected.

In some embodiments, the weight percentage of the silicon element based on the weight of the first active material layer is within a range of 0.1%∼30%. If the weight percentage of the silicon element based on the weight of the first active material layer is too low, the advantage of a high specific capacity of the silicon-based material is not effectively brought into play. If the weight percentage of the silicon element based on the weight of the first active material layer is too high, because the first active material layer that contains the first silicon-based material particles are close to the current collector, an excessive stress will be generated onto the current collector, bringing a risk of defilming. In some embodiments, the weight percentage of the silicon element based on the weight of the second active material layer is within a range of 1%∼100%.

In some embodiments, the weight percentage of the silicon element based on the weight of the first silicon-based material particles is within a range of 0.1%∼ 50%, and the weight percentage of the silicon element based on the weight of the second silicon-based material particles is within a range of 3%∼100%. If the weight percentage of the silicon element in the first silicon-based material particles is too low, the advantage of a high specific capacity of the silicon-based material is not effectively brought into play. If the weight percentage of the silicon element based on the weight of the first silicon-based material particles is too high, because the first active material layer that contains the first silicon-based material particles are close to the current collector, an excessive stress will be generated onto the current collector, bringing a risk of defilming.

In some embodiments, the average particle size Dv50 of the first silicon-based material particles satisfies 1 µm ≤ Dv50 ≤ 8 µm. If the average particle size of the first silicon-based material particles is too small, the first silicon-based material particles are likely to agglomerate. In addition, if the average particle size of the first silicon-based material particles is too large, suppression of the volume expansion of the first silicon-based material particles is adversely affected, and conductivity performance of the first active material layer is likely to deteriorate. In addition, if the average particle size of the first silicon-based material particles is too large, the strength of the negative electrode plate will decrease.

In some embodiments, the first active material layer and the second active material layer further include, each independently, at least one of artificial graphite, natural graphite, mesocarbon microbead, soft carbon, or hard carbon.

In some embodiments, the first active material layer and the second active material layer further include, each independently, a conductive agent and/or a binder. In some embodiments, the conductive agent includes at least one of conductive carbon black, acetylene black, carbon nanotubes, Ketjen black, conductive graphite, or graphene. In some embodiments, the weight percentage of the conductive agent based on the weight of the active material layer is within a range of 0.5%∼10%. In some embodiments, the binder includes at least one of a polyvinylidene fluoride, a vinylidene fluoride-hexafluoropropylene copolymer, a polyamide, a polyacrylonitrile, a polyacrylic ester, a polyacrylic acid, a sodium polyacrylate, a sodium carboxymethyl cellulose, a polyvinylpyrrolidone, a polyvinyl ether, a poly methyl methacrylate, a polytetrafluoroethylene, a polyhexafluoropropylene, or styrene butadiene rubber. In some embodiments, the weight percentage of the binder based on the weight of the active material layer is within a range of 0.5%∼10%.

As shown in FIG. 2, some embodiments of this application provide an electrochemical device. The electrochemical device includes a positive electrode plate 10, a negative electrode plate 12, and a separator 11 provided between the positive electrode plate 10 and the negative electrode plate 12. The positive electrode plate 10 may include a positive current collector and a positive active material layer coated on the positive current collector. In some embodiments, the positive active material layer may be coated on merely a part of regions of the positive current collector. The positive active material layer may include a positive active material, a conductive agent, and a binder. The positive current collector may be an aluminum foil, or another positive current collector commonly used in the art. The conductive agent of the positive electrode plate may include at least one of conductive carbon black, graphite flakes, graphene, carbon nanotubes, or carbon fiber. The binder in the positive electrode plate may include at least one of polyvinylidene fluoride, a vinylidene fluoride-hexafluoropropylene copolymer, a styrene-acrylate copolymer, styrene-butadiene copolymer, polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, poly methyl methacrylate, polytetrafluoroethylene, or polyhexafluoropropylene. The positive active material includes, but is not limited to, at least one of lithium cobalt oxide, lithium nickel oxide, lithium manganese oxide, lithium nickel manganese oxide, lithium iron phosphate, lithium nickel cobalt aluminum oxide, or lithium nickel cobalt manganese oxide. The foregoing positive active material may be doped or coated.

In some embodiments, the separator 11 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially the polyethylene and the polypropylene are highly effective in preventing short circuits, and improve stability of the battery through a shutdown effect. In some embodiments, a thickness of the separator is within a range of approximately 5 µm∼500 µm.

In some embodiments, a surface of the separator may further include a porous layer. The porous layer is provided on at least one surface of the separator. The porous layer includes inorganic particles and a binder. The inorganic particles include at least one selected fromfrom aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, or barium sulfate. In some embodiments, a diameter of a pore of the separator is in a range of approximately 0.01 µm to 1 µm. The binder is selected from at least one of polyvinylidene fluoride, a vinylidene fluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinylether, polymethylmethacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments, the negative electrode plate 12 may be the negative electrode plate described above.

In some embodiments, the electrochemical device includes, but is not limited to, a lithium-ion battery. In some embodiments, the electrochemical device may further include an electrolytic solution. In some embodiments, the electrolytic solution includes, but is not limited to at least two of dimethyl carbonate (DMC), ethyl methyl carbonate (EMC), diethyl carbonate (DEC), ethylene carbonate (EC), propylene carbonate (PC), and propyl propionate (PP). In addition, the electrolytic solution may additionally include at least one of the following as an additive to the electrolytic solution: vinylene carbonate (VC), fluoroethylene carbonate (FEC), or a dinitrile compound. In some embodiments, the electrolytic solution further includes a lithium salt.

In some embodiments of this application, using a lithium-ion battery as an example, the lithium-ion battery is prepared as follows: winding the positive electrode plate, the separator, and the negative electrode plate sequentially or wind the sequentially stacked materials into an electrode assembly, loading the electrode assembly into, for example, an aluminum laminated film for packaging, injecting an electrolytic solution into the electrode assembly; and performing formation and packaging procedures on the obtained electrode assembly to obtain the lithium-ion battery; then performing a performance test and a cycle test may be performed on a lithium-ion battery obtained above.

A person skilled in the art understands that the method for preparing the electrochemical device (for example, the lithium-ion battery) described above is merely an example. To the extent not departing from the content disclosed herein, other methods commonly used in the art may be used.

An embodiment of this application further provides an electronic device containing the electrochemical device. The electronic device used in the embodiment of this application is not particularly limited, and may be any electronic device known in the prior art. In some embodiments, the electronic device may include, but without limitation, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game machine, a watch, an electric tool, a flashlight, a camera, a large household battery, a lithium-ion capacitor, and the like.

Some specific embodiments and comparative embodiments are provided below for a better illustration of this application, using a lithium-ion battery as an example.

### Embodiment 1

Preparation of a negative electrode plate is described as follows. In this embodiment, a copper foil 10 µm thick is used as a current collector, SiO and graphite as a first active material, SiO and artificial graphite as a second active material, acetylene black as a conductive agent, styrene butadiene rubber and sodium carboxymethyl cellulose as a binder. Mixing the first active material, acetylene black, styrene butadiene rubber, and sodium carboxymethyl cellulose at a mass ratio of 96:1:1.5:1.5; dispersing the mixture in deionized water to obtain a slurry, stirring the slurry evenly, and coating a copper foil with the slurry; drying the copper foil to obtain a first active material layer. The thickness of the first active material layer is 45 µm, and the weight percentage of the silicon element based on the weight of the first active material layer is 5%; mixing the second active material, acetylene black, styrene butadiene rubber, and sodium carboxymethyl cellulose at a mass ratio of 96:1:1.5:1.5, dispersing the mixture in deionized water to obtain a slurry, coating the first active material layer with the slurry, and drying the first active material layer to obtain a second active material layer. The thickness of the second active material layer is 45 µm, and the weight percentage of the silicon element based on the weight of the second active material layer is 10%; and performing cold calendering and slitting to obtain a negative electrode plate.

Preparation of a positive electrode plate is described as follows: mixing LiCoO₂ as a positive active material, acetylene black, and polyvinylidene difluoride (PVDF) as a binder at a mass ratio of 94:3:3, fully stirring and evenly mixing the mixture in an N-methyl-pyrrolidone solvent system, and then coating an aluminum foil with the mixture, and performing drying and cold calendering to obtain a positive electrode plate.

Preparation of a separator is described as follows: dissolving polyvinylidene difluoride in water, and mechanically stirring the water to form a homogeneous slurry; coating the slurry onto both sides of a porous substrate (polyethylene), both sides of the porous substrate having been coated with a ceramic coating; and performing drying on the porous substrate obtained above to obtain a separator.

Preparation of an electrolytic solution is described as follows. In an environment with a water content of less than 10 ppm, mixing lithium hexafluorophosphate with a nonaqueous organic solvent (ethylene carbonate (EC):diethyl carbonate (DEC):propylene carbonate (PC):propyl propionate (PP):vinylene carbonate (VC) = 20:30:20:28:2 mass ratio) at a mass ratio of 8:92 to prepare an electrolytic solution in which a lithium salt concentration is 1 mol/L.

Preparation of a lithium-ion battery is described as follows: stacking the positive electrode plate, the separator, and the negative electrode plate sequentially so that the separator is located between the positive electrode plate and the negative electrode plate to serve a function of peel-off, and winding the stacked materials to obtain an electrode assembly; putting the electrode assembly in an aluminum laminated film that serves as an outer package, dehydrating the electrode assembly at 80 °C, injecting the electrolytic solution, and performing packaging; and performing steps such as chemical formation, degassing, and reshaping to obtain a lithium-ion battery.

In Embodiments 2∼11 and Comparative Embodiments 1∼3, the methods for preparing the positive electrode plate, the separator, the electrolytic solution, and the lithium-ion battery are almost the same as those in Embodiment 1, and differences lie merely in the preparation of the negative electrode plate. Differences in parameters are shown in Table 1 below.

In Embodiments 12∼15, the preparation methods employed are almost the same as those employed in Embodiment 9, and differences are described as follows. In Embodiment 12, the active material in the first active material layer is a silicon-carbon composite and artificial graphite, the weight percentage of the silicon element based on the weight of the first silicon-based material particles is 16%, the active material in the second active material layer is SiO and artificial graphite, and the weight percentage of the silicon element based on the weight of the second silicon-based material particles is 63.6%. In Embodiment 13, the active material in the first active material layer is silicon-carbon composite and artificial graphite, the weight percentage of the silicon element based on the weight of the first silicon-based material particles is 27%, the active material in the second active material layer is SiO and artificial graphite, and the weight percentage of the silicon element based on the weight of the second silicon-based material particles is 63.6%. In Embodiment 14, the active material in the first active material layer is a silicon-carbon composite and artificial graphite, the weight percentage of the silicon element based on the weight of the first silicon-based material particles is 36%, the active material in the second active material layer is SiO and artificial graphite, and the weight percentage of the silicon element based on the weight of the second silicon-based material particles is 63.6%. In Embodiment 15, the active material in the first active material layer is a silicon-carbon composite and artificial graphite, the weight percentage of the silicon element based on the weight of the first silicon-based material particles is 49%, the active material in the second active material layer is SiO and artificial graphite, and the weight percentage of the silicon element based on the weight of the second silicon-based material particles is 63.6%.

The performance parameter test methods related to the Embodiments and Comparative Embodiments are as follows.

Particle size test is described as follows:
Disassembling a lithium-ion battery to obtain a negative electrode plate, Take an amount of powder sample (or simply referred to as "sample") from a region of the negative electrode plate, and adding approximately 0.02 g of the powder sample into a 50 ml clean beaker; adding approximately 20 ml of deionized water, and a few drops of 1% surfactant into the deionized water to make the powder fully dispersed in the deionized water; ultrasonically cleaning the sample in a 120 W ultrasonic cleaning machine for 5 minutes; use a MasterSizer 2000 to test a particle size distribution: using a laser scattering particle size analyzer to test the sample and obtain a volume-based particle size distribution curve, based on which Dv50 of the sample may be obtained.

Test of the peeling rate of the negative active material layer /tearing rate of the current collector is described as follows, and the test process may include:
charging a lithium-ion battery at a temperature of 25 °C and a constant current of 0.5C until the voltage reaches 4.45 V, charging the battery at a constant voltage of 4.45 V until the current reaches 0.05C, leaving the battery to stand for 2 minutes, discharging the battery at a constant current of 0.5C until the voltage reaches 3.0 V, and leaving the battery to stand for 2 minutes, thereby completing a cycle; repeating the test for 100 cycles, disassembling the lithium-ion battery to obtain an electrode assembly, and spreading the electrode assembly flat; determining the peeling rate of the negative active material layer/tearing rate of the current collector according to the following criteria: if any piece larger than 2 mm² of the active material layer of the negative electrode plate is peeled off from the current collector, it is determined that the active material layer of the negative electrode plate is peeled off; if any tearing larger than 1 mm² occurs on the current collector, it is determined that the negative current collector is torn. The peeling of the negative active material layer/the tearing of the current collector is determined as long as either one of the foregoing criteria is met.

Test of the lithium plating rate of the negative electrode plate is described as follows, and the test process may include:
charging a lithium-ion battery at a temperature of 25 °C and a constant current of 1C until the voltage reaches 4.45 V, charging the battery at a constant voltage of 4.45 V until the current reaches 0.05C, leaving the battery to stand for 2 minutes, and then discharging the battery at a constant current of 1C until the voltage reaches 3.0 V, and leaving the battery to stand for 2 minutes, thereby completing a cycle; repeating the test for 10 cycles, and then disassembling the lithium-ion battery to obtain the electrode assembly; spreading the electrode assembly flat, and a lithium plating of the negative electrode plate is determined if the lithium plating is detected in any region larger than 2 mm² on the negative electrode plate.

Table 1 shows parameters and evaluation results in Embodiments 1∼15 and Comparative Embodiments 1∼3.

**Table 1**

| | Weight percentage of silicon based on the weight of the first active material layer | Weight percentage of silicon based on the weight of the second active material layer | Dv50 (µm) of the first silicon-based material particles | Dv50 (µm) of the second silicon-based material particles | Lithium plating rate | Peel-off rate of the negative active material layer/tearing rate of the current collector |
|---|---|---|---|---|---|---|
| Comparative Embodiment 1 | 5% | 5% | 6 | 6 | 6/10 | 4/10 |
| Comparative Embodiment 2 | 5% | 10% | 6 | 6 | 5/10 | 1/10 |
| Comparative Embodiment 3 | 5% | 10% | 15 | 15 | 8/10 | 1/10 |
| | | | | | | |
| Embodiment 1 | 5% | 10% | 6 | 15 | 0/10 | 0/10 |
| Embodiment 2 | 5% | 10% | 8 | 17 | 2/10 | 0/10 |
| Embodiment 3 | 5% | 10% | 5 | 12 | 3/10 | 0/10 |
| Embodiment 4 | 5% | 10% | 3 | 11 | 1/10 | 0/10 |
| Embodiment 5 | 5% | 10% | 2 | 8 | 2/10 | 0/10 |
| Embodiment 6 | 0.1% | 3% | 6 | 15 | 0/10 | 0/10 |
| Embodiment 7 | 1% | 5% | 6 | 15 | 1/10 | 0/10 |
| Embodiment 8 | 3% | 5% | 6 | 15 | 0/10 | 0/10 |
| Embodiment 9 | 10% | 16% | 6 | 15 | 1/10 | 1/10 |
| Embodiment 10 | 20% | 35% | 6 | 15 | 1/10 | 0/10 |
| Embodiment 11 | 30% | 45% | 6 | 15 | 2/10 | 1/10 |
| Embodiment 12 | 10% | 16% | 6 | 15 | 0/10 | 0/10 |
| Embodiment 13 | 10% | 16% | 6 | 15 | 0/10 | 0/10 |
| Embodiment 14 | 10% | 16% | 6 | 15 | 1/10 | 0/10 |
| Embodiment 15 | 10% | 16% | 6 | 15 | 1/10 | 1/10 |

As can be learned from comparison between Embodiments 1∼15 and Comparative Embodiment 1, the lithium plating is suppressed significantly. And, the peel-off of the active material layer from the negative current collector and the tearing of the negative current collector can also be suppressed when: the weight percentage of the silicon element based on the weight of the first active material layer is less than the weight percentage of the silicon element based on the weight of the second active material layer; and, the average particle size Dv50 of the first silicon-based material particles is smaller than the average particle size Dv50 of the second silicon-based material particles.

As can be learned from comparison between Embodiments 1∼11 and Comparative Embodiment 2∼3, the lithium plating is relatively severe when the average particle size Dv50 of the first silicon-based material particles is not smaller than the average particle size Dv50 of the second silicon-based material particles.

As can be learned from comparison of Embodiments 1∼5, when the average particle size Dv50 of the first silicon-based material particles satisfies 1 µm ≤ Dv50 ≤ 8 µm, the lithium plating is suppressed, and the peel-off of the active material layer from the negative current collector and the tearing of the negative current collector can also be suppressed.

As can be learned from comparison of Embodiments 6∼11, when the weight percentage of the silicon element based on the weight of the first active material layer is within the range of 0.1%-30%, the lithium plating is suppressed, and the peel-off of the active material layer from the negative current collector and the tearing of the negative current collector is suppressed.

As can be learned from comparison of Embodiments 12∼15, when the weight percentage of the silicon element based on the weight of the first silicon-based material particles is less than 50%, the lithium plating is suppressed, and the peel-off of the active material layer from the negative current collector and the tearing of the negative current collector is suppressed.

In conclusion, the silicon content in the first active material layer and the second active material layer and Dv50 of the first silicon-based material particles and the second silicon-based material particles have a significant effect on the probability of lithium plating occurring, the peel-off of the negative active material layer occurring and the probability of tearing of the current collector occurring. If the weight percentage of the silicon element based on the weight of the first active material layer is less than the weight percentage of the silicon element based on the weight of the second active material layer, there is a relatively lower probability that peeling off the negative active material layer and tearing the current collector may occur. If the average particle size Dv50 of the first silicon-based material particles is smaller than the average particle size Dv50 of the second silicon-based material particles, there is an evident adverse effect on the charging capabilities of a lithium-ion battery related to the first active material layer and the second active material layer. The charging capabilities can be enhanced, and the peel-off of the negative active material layer, and the tearing of the current collector can be suppressed when: the weight percentage of the silicon element based on the weight of the first active material layer is less than the weight percentage of the silicon element based on the weight of the second active material layer, and the average particle size Dv50 of the first silicon-based material particles is smaller than the average particle size Dv50 of the second silicon-based material particles.

The foregoing descriptions are merely about exemplary embodiments of this application and the technical principles applied. A person skilled in the art understands that the scope of disclosure in this application is not limited to the technical solutions formed by combining the foregoing technical features in the specified manner, but also covers other technical solutions formed by combining the foregoing technical features or equivalents thereof in any manner without departing from the conceptions disclosed above, for example, a technical solution formed by replacing any of the foregoing features with the technical features disclosed herein and serving similar functions.

## Claims

1. A negative electrode plate, comprising:
a current collector;
a first active material layer comprising first silicon-based material particles; and
a second active material layer, comprising second silicon-based material particles, **characterized in that**,
the first active material layer is provided between the current collector and the second active material layer,
a weight percentage of a silicon element based on a weight of the first active material layer is less than a weight percentage of the silicon element based on a weight of the second active material layer, and
an average particle size Dv50 of the first silicon-based material particles is smaller than an average particle size Dv50 of the second silicon-based material particles.

2. The negative electrode plate according to claim 1, **characterized in that**, the weight percentage of the silicon element based on the weight of the first active material layer is within a range of 0.1%∼30%, and the weight percentage of the silicon element based on the weight of the second active material layer is within a range of 1%∼100%.

3. The negative electrode plate according to claim 1 or 2, **characterized in that**, a weight percentage of the silicon element based on a weight of the first silicon-based material particles is less than a weight percentage of the silicon element based on a weight of the second silicon-based material particles.

4. The negative electrode plate according to claim 3, **characterized in that**, the weight percentage of the silicon element based on the weight of the first silicon-based material particles is within a range of 0.1%∼50%, and the weight percentage of the silicon element based on the weight of the second silicon-based material particles is within a range of 3%∼100%.

5. The negative electrode plate according to any one of claims 1 to 4, **characterized in that**, the first silicon-based material particles and the second silicon-based material particles each independently comprise one or more selected from the group consisting of silicon, a silicon alloy, a silicon oxide, and a silicon-carbon composite.

6. The negative electrode plate according to any one of claims 1 to 5, **characterized in that**, 1 µm ≤ the average particle size Dv50 of the first silicon-based material particles ≤ 8 µm.

7. The negative electrode plate according to any one of claims 1 to 6, **characterized in that**, a thickness of the first active material layer is within a range of 0.2 µm∼100 µm, and a thickness of the second active material layer is within a range of 0.2 µm∼100 µm.

8. The negative electrode plate according to any one of claims 1 to 7, **characterized in that**, the first active material layer and the second active material layer further comprise, each independently, at least one of artificial graphite, natural graphite, mesocarbon microbead, soft carbon, or hard carbon.

9. The negative electrode plate according to any one of claims 1 to 8, **characterized in that**, at least one of the first active material layer or the second active material layer further comprises a conductive agent, and a weight percentage of the conductive agent based on a weight of the first active material layer and the second active material layer is within a range of 0.5%∼10%.

10. The negative electrode plate according to any one of claims 1 to 9, **characterized in that**, at least one of the first active material layer or the second active material layer further comprises a binder, and a weight percentage of the binder based on a weight of the first active material layer and the second active material layer is within a range of 0.5%∼10%.

11. An electrochemical device, comprising:
a positive electrode plate;
a negative electrode plate; and
a separator provided between the positive electrode plate and the negative electrode plate, **characterized in that**,
the negative electrode plate is the negative electrode plate according to any one of claims 1 to 10.

12. The electrochemical device according to claim 11, **characterized in that**, the separator further comprises a porous layer provided on at least one surface of the separator.

13. The electrochemical device according to claim 12, **characterized in that**, the porous layer comprises inorganic particles and a binder.

14. The electrochemical device according to claim 13, **characterized in that**, the inorganic particles include at least one selected from aluminum oxide (Al2O3), silicon oxide (SiO2), magnesium oxide (MgO), titanium oxide (TiO2), hafnium dioxide (HfO2), tin oxide (SnO2), ceria (CeO2), nickel oxide (NiO), zinc oxide (ZnO), calcium oxide (CaO), zirconium oxide (ZrO2), yttrium oxide (Y2O3), silicon carbide (SiC), boehmite, aluminum hydroxide, magnesium hydroxide, calcium hydroxide, or barium sulfate.

15. An electronic device comprising the electrochemical device according to any one of claims 11-14.
